# FASCICULE DE BREVET EUROPEEN

(11) **EP 2 043 757 B1**
(45) Date de publication et mention de la délivrance du brevet: **16.06.2010**
(21) Numéro de dépôt: 07803987.2
(22) Date de dépôt: 06.07.2007
(51) Int. Cl.: B01D 46/24, F01N 3/022

(54) **FILTRE COMPRENANT UNE PLURALITE D'ELEMENTS EN NID D'ABEILLE REUNIS DANS UN ASSEMBLAGE DECENTRE**
FILTER MIT MEHREREN IN EINER OFFSET-ANORDNUNG VERBUNDENEN WABENELEMENTEN
FILTER COMPRISING A PLURALITY OF HONEYCOMB ELEMENTS JOINED TOGETHER IN AN OFFSET ASSEMBLY

(30) Priorité: 18.07.2006 FR 0653019; 22.12.2006 FR 0655865
(43) Date de publication de la demande: 08.04.2009
(73) Titulaire: Saint-Gobain Centre de Recherches et d'Etudes Européen, 92400 Courbevoie (FR)
(72) Inventeur: GIASSI, Alessandro, 75012 Paris (FR); CARRANZA, Francisco, José, 1000 BRUSSELS (BE)
(74) Mandataire: Lucas, Francois
(86) Numéro de dépôt international: PCT/FR2007/051608
(87) Numéro de publication internationale: WO 2008/009837

(56) Documents cités:
- EP-A- 1 413 345
- EP-A- 1 618 941
- EP-A1- 1 371 406

## Description

L'invention se rapporte au domaine des structures filtrantes du type assemblées comprenant éventuellement une composante catalytique, par exemple utilisées dans une ligne d'échappement d'un moteur à combustion interne du type diesel.

Les filtres permettant le traitement des gaz et l'élimination des suies typiquement issues d'un moteur diesel sont bien connus de l'art antérieur. Ces structures présentent toutes le plus souvent une structure en nid d'abeille, une des faces de la structure permettant l'admission des gaz d'échappement à traiter et l'autre face l'évacuation des gaz d'échappement traités. La structure comporte, entre les faces d'admission et d'évacuation, un ensemble de conduits ou canaux adjacents d'axes parallèles entre eux séparés par des parois poreuses. Les conduits sont obturés à l'une ou l'autre de leurs extrémités pour délimiter des chambres d'entrée s'ouvrant suivant la face d'admission et des chambres de sortie s'ouvrant suivant la face d'évacuation. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant.

A l'heure actuelle, on utilise pour la filtration des gaz des filtres en matière céramique poreuse, par exemple en cordiérite, en alumine, en mullite, en nitrure de silicium, en un mélange silicium/carbure de silicium ou en carbure de silicium.

Le document EP 1 618 941 décrit un filtre comprenant un assemblage d'éléments de type en nid d'abeilles.

Les filtres ou structures de filtration poreuses des suies sont utilisés à grande échelle dans les dispositifs de dépollution des gaz d'échappement d'un moteur thermique diesel voire plus rarement essence. Bien qu'elle n'y soit pas limitée, la présente invention se rapporte tout particulièrement à de tels dispositifs.

De façon connue, durant sa mise en oeuvre dans une ligne d'échappement automobile, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. La structure poreuse est alors soumise à des contraintes thermiques et mécaniques intenses, qui peuvent entraîner des micro-fissurations susceptibles sur la durée d'entraîner une perte sévère des capacités de filtration de l'unité, voire sa désactivation complète. Ce phénomène est particulièrement observé sur des filtres monolithiques de grand diamètre.

Pour résoudre ces problèmes et augmenter la durée de vie des filtres, il a été proposé plus récemment des structures de filtration plus complexes, associant en un bloc filtrant plusieurs éléments monolithiques en nid d'abeille. Les éléments sont le plus souvent assemblés entre eux par collage au moyen d'un ciment de nature céramique, appelé dans la suite de la description ciment de joint ou joint. Des exemples de telles structures filtrantes sont par exemple donnés dans les demandes de brevets EP 816 065, EP 1 142 619, EP 1 455 923 ou encore WO 2004/090294.

Il est connu par ailleurs que l'introduction d'un filtre à particules tel que précédemment décrit dans la ligne d'échappement du moteur entraîne une perte de charge susceptible d'altérer les performances de celui-ci. Le filtre assemblé doit en conséquence être configuré de manière à éviter ou au moins réduire au minimum une telle altération.

La fabrication des filtres à particules selon l'invention est réalisée par assemblage d'éléments parallélépipédiques, le plus souvent carrés, au moyen d'un ciment de joint. L'épaisseur du joint, entre deux éléments contigus, est de l'ordre de 1 à 3 mm. Après solidification et prise du ciment, on obtient une forme brute, suffisamment résistante mécaniquement pour être usinée, de manière à obtenir une forme du filtre adaptée à son logement dans la ligne d'échappement. En général, le filtre est achevé par une étape de recouvrement par un ciment de revêtement qui isole le filtre assemblé. Une contrainte supplémentaire nécessaire à la bonne tenue du filtre en fonctionnement est lié au procédé de fabrication de la structure elle-même et plus particulièrement à la question de l'usinage des différents éléments. Ainsi, après usinage, il est apparu que si la partie résiduelle des éléments les plus externes de la structure est trop petite, un risque d'arrachement excessif de matière existe, avec pour corollaire une fragilité mécanique de la structure finalement obtenue, et même, dans les cas extrêmes, un arrachement complet de l'élément de son joint de ciment. Il a été déterminé par la demanderesse que le volume résiduel des éléments les plus externes, après usinage, devait typiquement rester inférieur à environ un seizième et de préférence à un huitième du volume initial avant usinage, afin de minimiser les risques d'apparition de tels phénomènes et rendre ainsi compatible le procédé avec une production industrielle.

Les filtres assemblés décrits dans les publications antérieures et actuellement commercialisées possèdent toutes au moins un axe de symétrie. Les formes les plus caractéristiques sont circulaires, tel que décrit dans les demandes EP 1 455 923 ou WO 2004/090294 ou ovoïde tel que décrit dans les demandes EP 816 065 ou encore EP 1 626 037. Bien que les deux formes précédentes soient les plus utilisées, d'autres formes très diverses ont également été décrites.
Les éléments unitaires présentent par exemple typiquement une largeur de section comprise entre 30 mm et 50 mm. A titre d'exemple, 14 éléments unitaires de section carrée et de largeur 36 mm sont nécessaires pour la synthèse d'un filtre rond d'environ 14 cm de diamètre.

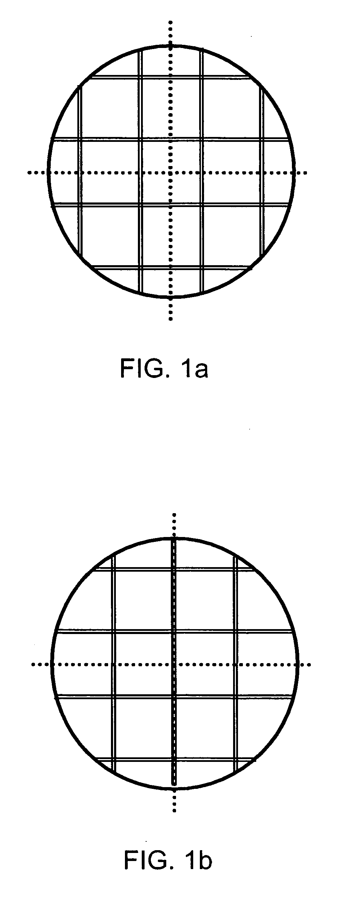

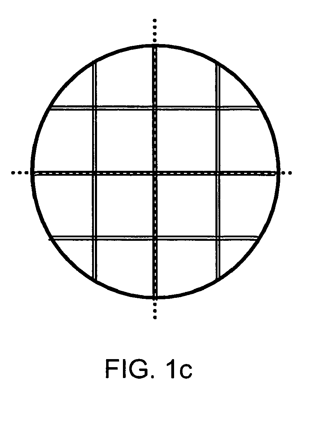

Dans tous ces assemblages, le centre géométrique du filtre, dans un plan de coupe sectionnel, coïncide soit avec le centre d'un des éléments, soit avec une position occupée par le ciment de joint faisant la jonction entre 2 éléments, soit encore avec une position du ciment de joint faisant la jonction entre quatre éléments du filtre, tel qu'illustré respectivement par les figures 1a, 1b et 1c.

La demande de brevet EP 1 371 406 décrit une structure assemblée dans laquelle la plus courte distance séparant le centre de gravité d'une section de ladite structure de la surface de joint est inférieur à 1/10 de la plus grande distance entre ledit centre et la circonférence du filtre.

Le but de la présente invention est ainsi de fournir une structure en nid d'abeille d'un type nouveau, permettant de répondre à l'ensemble des problèmes précédemment exposés.

Plus précisément, l'invention concerne une structure filtrante comprenant l'assemblage de plusieurs éléments monolithiques en nid d'abeille tels que précédemment décrits et combinant, pour une efficacité maximale de filtration et une utilisation de longue durée, les propriétés suivantes :
- une perte de charge minimale en fonctionnement, typiquement sur une ligne d'échappement d'un moteur à combustion interne,
- une résistance thermomécanique suffisante pour résister aux contraintes de fonctionnement du filtre,
- un volume minimal des éléments externes dans l'assemblage final, c'est-à-dire après usinage, au moins égal à un seizième et de préférence au moins égal à un huitième du volume d'un élément en position central.
La structure filtrante selon l'invention se caractérise par un assemblage non centré ou décentré des éléments, c'est-à-dire que le centre géométrique de ladite structure ne correspond pas au centre d'un élément ou ne coïncide pas avec un élément de symétrie existant entre plusieurs desdits éléments, par exemple tel qu'illustré par les figures 1a, 1b ou 1c.

Dans sa forme la plus générale, la présente invention se rapporte à une structure de filtration de gaz chargés en particules, comprenant un assemblage d'éléments du type en nid d'abeilles liés par un joint, chaque élément incorporant un ensemble de conduits ou canaux adjacents d'axes parallèles entre eux séparés par des parois poreuses, lesquels conduits sont obturés par des bouchons à l'une ou l'autre de leurs extrémités pour délimiter des chambres d'entrée s'ouvrant suivant une face d'admission des gaz et des chambres de sortie s'ouvrant sur une face d'évacuation des gaz, de telle façon que le gaz à filtrer traverse les parois poreuses, ladite structure se **caractérisant en ce que** son centre géométrique, selon une section de la structure perpendiculaire à son axe principal, ne correspond pas à un élément de symétrie d'un élément ou d'un groupe d'élément dans l'assemblage et en ce qu'elle répond aux caractéristiques géométriques suivantes, dans ledit plan de section :
- si 0 < D ≤ 3×Lₑ + 4×Lⱼ ou si 4×Lₑ + 5×Lⱼ ≤ D ≤ 4,25×Lₑ + 4×Lⱼ ou si 6×Lₑ + 5×Lⱼ ≤ D ≤ 7×Lₑ + 6×Lⱼ ou si 8×Lₑ + 7×Lⱼ ≤ D ≤ 8.5×Lₑ + 6×Lⱼ, alors d est compris entre 0 exclu et 0,1×Lⱼ×Lₑ,
- si 3×Lₑ + 4×Lⱼ ≤ D ≤ 3,5×Lₑ + 5×Lⱼ ou si 4,25×Lₑ + 5×Lⱼ ≤ D ≤ 5×Lₑ + 5×Lⱼ, alors d est compris entre 0,2×Lⱼ×Lₑ et 0,35×Lⱼ×Lₑ,
où D est le segment de plus grande distance reliant deux points de l'enveloppe du filtre, d est la distance entre le centre de l'élément se trouvant le plus proche de la position centrale dans l'assemblage et le centre géométrique du filtre, Le est la largeur d'un élément unitaire entier et Lj est l'épaisseur moyenne du joint.
Les paramètres D, d, Lj et Le correspondent aux valeurs nominales et sont exprimés en mm.

De préférence, selon l'invention, le segment D passe en outre par le centre géométrique du filtre, voire par l'axe de symétrie principal du filtre.

Par matériau à base de SiC, il est entendu au sens de la présente description que ledit matériau comprend au moins 30% de SiC en masse, de préférence au moins 70% de SiC en masse et de manière très préférée au moins 98% de SiC en masse.

De préférence, la structure filtrante comprend une pluralité d'éléments filtrants à base de SiC reliés entre eux par un ciment de joint dont la conductivité thermique est au moins de 0,3 W/m.K entre 20 et 800°C. Une conductivité thermique élevée du ciment de joint permet avantageusement d'homogénéiser les transferts thermiques dans le filtre tandis qu'une conductivité thermique faible inférieure à 0,3 W/m.K (mesure typiquement réalisée à une température de 600°C) contribue à accroître les gradients thermiques et les contraintes thermomécaniques dans le joint et au sein du filtre.

En général, la section d'un élément constituant la structure assemblée est parallélépipédique et de préférence carrée, la largeur de l'élément étant comprise entre 30 mm et 50 mm.

Typiquement, l'épaisseur moyenne du joint de la structure est comprise entre 0,5 et 4 mm.

Avantageusement, l'épaisseur des parois est comprise entre 200 et 500 µm.

La structure peut comprendre en outre un revêtement catalytique pour le traitement des gaz polluants du type CO ou HC et NOx.

Une structure typique selon l'invention comprend une pluralité d'éléments en nid d'abeille reliés entre eux par un ciment de joint, le nombre de canaux dans les éléments filtrants étant compris entre environ 7,75 et environ 62 par cm², lesdits canaux ayant une section d'environ 0,5 à 9 mm².

L'invention se rapporte également à l'utilisation d'une structure selon l'une des revendications précédentes comme filtre à particules dans une ligne d'échappement d'un moteur diesel ou essence, de préférence diesel.

Les exemples qui suivent, non limitatifs, permettront une meilleure compréhension de l'invention et de ses avantages :

### Exemples :

Dans les exemples qui suivent, on a cherché à synthétiser une série de filtres répondant aux critères selon la présente invention et illustrant ses avantages par rapport à une autre série de filtres donnés dans un but comparatif et ne répondant pas aux critères selon l'invention.

Tous les filtres ont été synthétisés selon la méthode qui suit :

### 1°) synthèse des éléments :

Les éléments unitaires ont été synthétisés de la manière suivante :
Dans un malaxeur, on a d'abord préparé, selon des techniques bien connues, un mélange initial de poudres de carbure de silicium, d'un agent porogène du type polyéthylène et d'un liant organique du type méthylcellulose.

On ajoute de l'eau au mélange de poudres et on malaxe jusqu'à obtenir une pâte homogène et dont la plasticité permet l'extrusion à travers une filière de structures monolithiques en nid d'abeille de section carrée dont les caractéristiques dimensionnelles sont données dans le tableau 1 :

**Tableau 1**

| | |
|---|---|
| Géométrie des canaux | Carré |
| Densité de canaux | 180 cpsi (canaux par inch carré, 1 inch = 2,54 cm) |
| Epaisseur des parois | 350 µm |
| Longueur | 15,2 cm |
| Largeur | 3,6 cm |
| Volume | 2,47 litres |
| Porosité | Environ 47% |
| Diamètre médian de pores | Environ 15µm |

On sèche ensuite les monolithes crus obtenus par micro-onde pendant un temps suffisant pour amener la teneur en eau non liée chimiquement à moins de 1 % en masse.

On bouche alternativement les canaux de chaque face du monolithe selon des techniques bien connues, par exemple décrites dans la demande WO 2004/065088.

Le monolithe est ensuite cuit selon une montée en température de 20°C/heure jusqu'à atteindre une température de l'ordre de 2200°C qui est maintenue pendant 2 heures.

On obtient finalement une série de monolithes en carbure de silicium dont les caractéristiques microstructurales sont sensiblement identiques.

### 2°) assemblage du filtre

Conformément à l'enseignement de la demande de brevet EP 816 065, les éléments sont ensuite assemblés entre eux par collage au moyen d'un ciment de nature céramique puis usiné, afin de constituer des filtres de diamètre approprié.
Un ciment pour le joint est préparé en mélangeant :
- 85% poids d'une poudre de SiC de granulométrie comprise entre 10 et 200 µm,
- 4% poids d'une poudre d'alumine calcinée commercialisée par la société Almatis,
- 10% poids d'une poudre d'alumine réactive commercialisée par la société Almatis,
- 0,8% poids d'un liant temporaire et plastifiant du type Cellulose,
- 0,2% poids d'un défloculant du type TPPNa (Tripolyphosphate de sodium).

On additionne une quantité d'eau correspondant à 15% du poids de ce mélange pour obtenir un ciment de viscosité adéquate.

On a synthétisé en suivant ce mode de synthèse différents filtres selon l'invention ou comparatifs, en modifiant la forme du filtre, son diamètre et la position et la taille des éléments au sein du filtre par rapport à son centre géométrique.

Un essai avec un ciment peu conducteur thermiquement a été réalisé en mélangeant :
- 44% poids d'une poudre de SiC de granulométrie comprise entre 10 et 200 µm,
- 5% poids d'une poudre d'alumine calcinée commercialisée par la société Almatis,
- 10% poids d'une poudre d'alumine réactive commercialisée par la société Almatis,
- 40% de sphères creuses commercialisées par Enviro-spheres sous le nom « e-spheres », qui présentent une composition chimique typique 60% SiO2 et 40% A1203 et une taille médiane de l'ordre de 100 µm
- 0,8% poids d'un liant temporaire et plastifiant du type Cellulose,
- 0,2% poids d'un défloculant du type TPPNa (Tripolyphosphate de sodium).

On additionne une quantité d'eau correspondant à 30% du poids de ce mélange pour obtenir un ciment de viscosité adéquate.

Préalablement à l'assemblage, en fonction des dimensions et de la forme du filtre final, certains éléments unitaires sont découpés selon leur axe principal, c'est-à-dire dans le sens de la longueur, de telle façon que le nombre minimal desdits éléments nécessaires pour chaque assemblage soit utilisé.

Les éléments de taille plus élevée ont été réalisés en utilisant une filière d'extrusion adaptée à la taille d'élément voulue.

Les propriétés des filtres ont été mesurées selon les protocoles suivants :

### A- Mesure de la perte de charge :

Par perte de charge, on entend au sens de la présente invention la pression différentielle existant entre l'amont et l'aval du filtre. La perte de charge a été mesurée selon les techniques de l'art, pour un débit d'air de 300 m³/h dans un courant d'air ambiant.

### B- Mesure de la résistance thermomécanique :

Les différents filtres sont montés sur une ligne d'échappement d'un moteur diesel 2.0 L mis en marche à pleine puissance (4000 tr/minutes) pendant 30 minutes puis démontés et pesés afin de déterminer leur masse initiale. Les filtres sont ensuite remontés sur banc moteur avec un régime à 3000 tr/min et un couple de 50 Nm afin d'obtenir des charges en suies dans le filtre de 8 g/l.

Les filtres ainsi chargés sont remontés sur la ligne pour subir une régénération sévère ainsi définie : après une stabilisation à un régime moteur de 1700 tours/minute pour un couple de 95 Nm pendant 2 minutes, une post-injection est réalisée avec 70° de phasage pour un débit de post injection de 18mm³/coup. Une fois la combustion des suies initiée, plus précisément lorsque la perte de charge diminue pendant au moins 4 secondes, le régime du moteur est abaissé à 1050 tours/minute pour un couple de 40 Nm pendant 5 minutes afin d'accélérer la combustion des suies. Le filtre est ensuite soumis à un régime moteur de 4000 tours/minute pendant 30 minutes afin d'éliminer les suies restantes.

Le niveau de fissuration du filtre est de préférence mesuré à l'aide d'un procédé du type non destructif, décrit dans la demande de brevet FR-A-2 840 405, comprenant en particulier la mesure de la propagation des ondes ultrasonores au travers du filtre. Parmi les paramètres de la propagation (vitesse de propagation, fréquence et amplitude des ondes), la vitesse s'est révélée être un indicateur fiable de la quantité et de la gravité des fissures. Une diminution de la vitesse de propagation trop importante par rapport à la vitesse de propagation des ondes ultrasonores à travers le matériau neuf peut en effet être corrélée avec la présence de fissures.

L'indice de fissuration correspond en pourcentage à la variation de vitesse de propagation des ondes ultrasonores au travers du filtre régénéré par rapport au filtre neuf avant régénération , les deux.mesures étant faites selon le même protocole opératoire. Cet indice est en règle générale négatif.

On mesure la vitesse de propagation des ultrasons à une fréquence typiquement de 50KHz. L'équipement utilisé peut être par exemple celui commercialisé par la société CNS Farnell sous le nom de « Pundit plus ».

Le tableau 2 ci-dessous, pour les différents arrangements des filtres synthétisés, selon l'invention ou en dehors, permet de comparer les performances obtenues en terme de perte de charge et tenue mécanique.

**Tableau 2**

| **Exemples** | **unités** | **Comp 1a** | **Ex 1** | **Comp 2a** | **Comp 2b** | **Ex 2** | **Comp 3a** | **Ex 3** | **Comp 4a** | **Ex 4** | **Comp 5a** | **Comp 6a** | **Ex 6** | **Comp. 7a** | **Ex 7** |
|---|---|---|---|---|---|---|---|---|---|---|---|---|---|---|---|
| **Famille de diamètre** | | **1** | **1** | **2** | **2** | **2** | **3** | **3** | **4** | **4** | **Ciment peu conducteur thermiquement** | **Autre forme de filtre non circulaire** | | **Avec taille élément différent** | |
| **Forme générale** | | Circulaire | Circulaire | Circulaire | Circulaire | Circulaire | Circulaire | Circulaire | Circulaire | Circulaire | Circulaire | **Ellipsoïdale** | | **Circulaire** | |
| **Diamètre filtre D** | mm | 103 | **103** | **118** | **118** | **118** | **156** | **156** | **176** | **176** | **156** | **195 x 102** | **195 x 102** | **156** | **156** |
| **Largeur d'élément unitaire** | mm | **35,8** | **35,8** | **35,8** | **35,8** | **35,8** | **35,8** | **35,8** | **35,8** | **35,8** | **35,8** | **35,8** | **35,8** | **45** | **45** |
| **Epaisseur de joint moyenne** | mm | **2** | **2** | **2** | **2** | **2** | **2** | **2** | **2** | **2** | **2** | **2** | **2** | **2** | **2** |
| ***Arrangement*** | | Type fig.1c | Décalé par rapport à fig.1a | Type fig.1c | Type fig.1a | Décalé par rapport à fig.1b | Type fig.1c | Décalé par rapport à fig.1a | Type fig.1c | Décalé par rapport à fig.1b | Décalé par rapport à fig.1a | Type fig.1b | Décalé par rapport à fig.1a | Type fig.1c | Décalé par rapport à fig.1b |
| **Conductivité thermique ciment** | **W/m.K** | 1,9 | 1,9 | 1,9 | 1,9 | 1,9 | 1,9 | 1,9 | 1,9 | 1,9 | **0,2** | 1,9 | 1,9 | 1,9 | 1,9 |
| **Distance d** | mm | **27** | **2** | **27** | **0** | **17** | **27** | **2** | **27** | **17** | **2** | **19** | **2** | **32** | **22** |
| **N° Éléments** | | **8** | **7** | **14** | **13** | **12** | **18** | **17** | **28** | **22** | **17** | **16** | **13** | **14** | **11** |
| **Résistance mécanique des éléments périphériques** | | OK | OK | OK | * | OK | OK | OK | OK | OK | OK | OK | OK | OK | OK |
| **Tenue thermomécanique (indice de fissuration)** | % | **0** | **0** | **-3,5** | **-3** | **-0,6** | **0** | **0** | **-1,8** | **-1,2** | **-15** | **-6** | **-4,8** | **0** | **0** |
| **Perte de charge** | mbars | 43,5 | **38,9** | **28,0** | **25,8** | **26,1** | **13,0** | **12,6** | **9,3** | **9,0** | **12,7** | **18,0** | **17,5** | **12,5** | **12,3** |

| | | | | | | | | | | | | | | | |
|---|---|---|---|---|---|---|---|---|---|---|---|---|---|---|---|
| * problème de tenue mécanique : éléments périphériques trop fragiles | | | | | | | | | | | | | | | |

Dans le tableau 1, on observe que les exemples 1, 2, 3, 4 et 7 selon l'invention, par comparaison respectivement avec les exemples 1a, 2a et 2b, 3a, 4a, 6a et 7a, en dehors du domaine de l'invention, montrent une tenue thermomécanique au moins aussi satisfaisante, telle que mesurée en terme d'indice de fissuration et de perte de charge.
On note également que le filtre comparatif 2b montre une perte de charge plus faible que le produit de l'invention mais il présente une tenue mécanique de certains de ses éléments périphériques trop faible pour une application en tant que filtre à particules. Cette tenue mécanique faible a été attribuée au volume résiduel de certains éléments périphériques du filtre, inférieur à 1/16 ^{ème}, voire à 1/8^{ème} de volume de l'élément en position centrale.
L'exemple comparatif 5a se différentiant par un ciment trop peu conducteur montre une tenue thermomécanique beaucoup plus faible que l'exemple 3 selon l'invention.
En outre, pour des dimensions et formes équivalentes, le tableau 2 montre que les structures selon l'invention nécessitent pour leur assemblage l'utilisation d'un nombre minime d'éléments unitaires.

## Revendications

1. Structure de filtration de gaz chargés en particules, comprenant un assemblage d'éléments du type en nid d'abeilles liés par un joint, chaque élément incorporant un ensemble de conduits ou canaux adjacents d'axes parallèles entre eux séparés par des parois poreuses, lesquels conduits sont obturés par des bouchons à l'une ou l'autre de leurs extrémités pour délimiter des chambres d'entrée s'ouvrant suivant une face d'admission des gaz et des chambres de sortie s'ouvrant sur une face d'évacuation des gaz, de telle façon que le gaz à filtrer traverse les parois poreuses, ladite structure **se caractérisant en ce que** son centre géométrique, selon une section de la structure perpendiculaire à son axe principal, ne correspond pas à un élément de symétrie d'un élément ou d'un groupe d'élément dans l'assemblage et **en ce qu'**elle répond aux caractéristiques géométriques suivantes:
- si 0 < D ≤ 3×Lₑ + 4×Lⱼ ou si 4×Lₑ + 5×Lⱼ ≤ D ≤ 4,25×Lₑ + 4×Lⱼ ou si 6×Lₑ + 5×Lⱼ ≤ D ≤ 7×Lₑ + 6×Lⱼ ou si 8×Lₑ + 7×Lⱼ ≤ D ≤ 8.5×Lₑ + 6×Lⱼ, alors d est compris entre 0 exclu et 0,1×Lⱼ×Lₑ,
- si 3×Lₑ + 4×Lⱼ ≤ D ≤ 3,5×Lₑ + 5×Lⱼ ou si 4,25×Lₑ + 5xLⱼ ≤ D ≤ 5×Lₑ + 5×Lⱼ ou si 5,6×Lₑ + 3×Lⱼ ≤ D ≤ 6×Lₑ + 5×Lⱼ, alors d est compris entre 0,2×Lⱼ×Lₑ et 0,35×Lⱼ×Lₑ,
où D est le segment de plus grande distance reliant deux points de l'enveloppe du filtre et passant par le centre géométrique du filtre, voire par l'axe de symétrie principal du filtre, d est la distance entre le centre de l'élément se trouvant en position centrale dans l'assemblage et le centre géométrique du filtre, Le est la largeur d'un élément unitaire entier et Lj est l'épaisseur moyenne du joint.

2. Structure filtrante selon la revendication 1, dans laquelle le segment D passe en outre par le centre géométrique du filtre, voire par l'axe de symétrie principal du filtre.

3. Structure filtrante selon la revendication 1 ou 2 comprenant une pluralité d'éléments filtrants à base de SiC reliés entre eux par un ciment de joint dont la conductivité thermique est au moins de 0,3 W/m.K entre 20 et 800°C.

4. Structure selon la revendication 1 à 3 dans laquelle la section d'un élément est parallélépipédique et de préférence carrée et dans laquelle la largeur de l'élément est comprise entre 30 mm et 50 mm.

5. Structure selon l'une des revendications précédentes dans laquelle l'épaisseur moyenne du joint est comprise entre 0,5 et 4 mm.

6. Structure selon l'une des revendications précédentes, dans laquelle l'épaisseur des parois est comprise entre 200 et 500 µm.

7. Structure selon l'une des revendications précédentes comprenant en outre un revêtement catalytique pour le traitement des gaz polluants du type CO ou HC et NOx.

8. Structure selon l'une des revendications précédentes dans laquelle une pluralité d'éléments en nid d'abeille sont reliés entre eux par un ciment de joint, le nombre de canaux dans les éléments filtrants étant compris entre environ 7,75 et environ 62 par cm², lesdits canaux ayant une section d'environ 0,5 à 9 mm².

9. Utilisation d'une structure selon l'une des revendications précédentes comme filtre à particules dans une ligne d'échappement d'un moteur diesel ou essence, de préférence diesel.

## Claims

1. A structure for filtering particulate-laden gases, comprising an assembly of elements of the honeycomb type linked by a joint, each element incorporating a set of adjacent ducts or channels having mutually parallel axes and separated by porous walls, said ducts being closed off by plugs at one or the other of their ends so as to bound entry chambers that open onto a gas intake face and exit chambers opening onto a gas discharge face, in such a way that the gas to be filtered passes through the porous walls, said structure being **characterized in that** its geometrical center, in a cross section of the structure perpendicular to its main axis, does not correspond to a symmetry element of an element or of a group of elements in the assembly, and **in that** it answers to the following geometrical characteristics:
- if 0 < D ≤ 3×Lₑ + 4×Lⱼ or if 4×Lₑ + 5×Lⱼ ≤ D ≤ 4.25×Lₑ + 4×Lⱼ or if 6×Lₑ + 5×Lⱼ ≤ D ≤ 7×Lₑ + 6×Lⱼ or if 8×Lₑ + 7×Lⱼ ≤ D ≤ 8.5×Lₑ + 6×Lⱼ, then d is between 0 exclusive and 0.1×Lⱼ×Lₑ,
- if 3×Lₑ + 4×Lⱼ ≤ D ≤ 3.5×Lₑ + 5×Lⱼ or if 4.25×Lₑ + 5×Lⱼ ≤ D ≤ 5×Lₑ + 5×Lⱼ or if 5.6×Lₑ + 3×Lⱼ ≤ D ≤ 6×Lₑ + 5×Lⱼ, then d is between 0.2×Lⱼ×Lₑ and 0.35×Lⱼ×Lₑ,
where D is the segment having the greatest distance joining two points of the filter envelope and passing through the geometrical center of the filter, or even through the main axis of symmetry of the filter, d is the distance between the center of the element located in the central position in the assembly and the geometrical center of the filter, Le is the width of a whole unit element and Lj is the average thickness of the joint.

2. The filter structure as claimed in claim 1, in which the segment D also passes through the geometrical center of the filter, or even through the main axis of symmetry of the filter.

3. The filter structure as claimed in either of claims 1 and 2, comprising a plurality of filter elements based on SiC joined together by a joint cement having a thermal conductivity of at least 0.3 W/m.K between 20 and 800°C.

4. The structure as claimed in claims 1 to 3, in which the cross section of one element is a parallelepiped and preferably square, and in which the width of the element is between 30 mm and 50 mm.

5. The structure as claimed in one of the preceding claims, in which the average thickness of the joint is between 0.5 and 4 mm.

6. The structure as claimed in one of the preceding claims, in which the wall thickness is between 200 and 500 µm.

7. The structure as claimed in one of the preceding claims, further comprising a catalytic coating for the treatment of the polluting gases such as CO or HC and NOx.

8. The structure as claimed in one of the preceding claims, in which a plurality of honeycomb elements are joined together by a joint cement, the number of channels in the filter elements being between about 7.75 and about 62 per cm², said channels having a cross section of about 0.5 to 9 mm².

9. The use of a structure as claimed in one of the preceding claims as a particulate filter in an exhaust line of a diesel or gasoline engine, preferably a diesel engine.

## Patentansprüche

1. Filterstruktur für mit Partikeln beladenes Gas, die einen Aufbau aus wabenförmigen Elementen, die durch eine Verbindung miteinander verbunden sind, umfasst, wobei jedes Element eine Gruppe von einander benachbarten Leitungen oder Kanälen mit zueinander parallelen Achsen, die durch poröse Wände getrennt sind, umfasst, diese Leitungen an einem ihrer Enden mit Verschlüssen verschlossen sind, um Eintrittskammern, die sich zu einer Einlassseite des Gases hin öffnen, und Austrittskammern, die sich zu einer Auslassseite des Gases hin öffnen, derart zu begrenzen, dass das zu filternde Gas durch die porösen Wände hindurchströmt, und diese Struktur **dadurch gekennzeichnet ist, dass** ihre geometrische Mitte entsprechend einem Querschnitt durch die Struktur, der senkrecht zu ihrer Hauptachse verläuft, keinem Symmetrieelement eines Elements oder einer Gruppe von Elementen in dem Aufbau entspricht, **und dass** sie folgende geometrische Eigenschaften besitzt:
- wenn 0 < D ≤ 3·Lₑ + 4·Lⱼ oder, wenn 4·Lₑ + 5·Lⱼ ≤ D ≤ 4,25·Lₑ + 4·Lⱼ oder, wenn 6·Lₑ + 5·Lⱼ ≤ D ≤ 7·Lₑ + 6·Lⱼ oder, wenn 8·Lₑ + 7·Lⱼ ≤ D ≤ 8,5·Lₑ + 6·Lⱼ, dann ist d 0 ausgeschlossen bis 0,1·Lⱼ·Lₑ und,
- wenn 3·Lₑ + 4·Lⱼ ≤ D ≤ 3,5·Lₑ + 5·Lⱼ oder, wenn 4,25·Lₑ + 5·Lⱼ ≤ D ≤ 5·Lₑ + 5·Lⱼ oder, wenn 5,6·Lₑ + 3·Lⱼ ≤ D < 6·Lₑ + 5·Lⱼ, dann ist d 0,2·Lⱼ·Lₑ bis 0,35·Lⱼ·Lₑ,
wobei D das Segment mit der größten Entfernung, das zwei Punkte der Hülle des Filters miteinander verbindet und durch die geometrische Mitte des Filters und sogar durch die Hauptsymmetrieachse des Filters hindurchgeht, d die Entfernung zwischen der Mitte des Elements, das sich in mittiger Position in dem Aufbau befindet, und der geometrischen Mitte des Filters, Le die Breite eines ganzen Einheitselements und Lj die mittlere Dicke der Verbindung ist.

2. Filterstruktur nach Anspruch 1, in welcher das Segment D außerdem durch die geometrische Mitte des Filters und sogar durch die Hauptsymmetrieachse des Filters hindurchgeht.

3. Filterstruktur nach Anspruch 1 oder 2, die eine Vielzahl von Filterelementen auf der Basis von SiC umfasst, die untereinander durch einen Verbindungszement verbunden sind, dessen Wärmeleitfähigkeit mindestens 0,3 W/m·K zwischen 20 und 800 °C beträgt.

4. Struktur nach Anspruch 1 bis 3, in welcher der Querschnitt eines Elements parallelepipedisch und vorzugsweise quadratisch ist und in welcher die Breite des Elements 30 bis 50 mm beträgt.

5. Struktur nach einem der vorhergehenden Ansprüche, in welcher die mittlere Dicke der Verbindung 0,5 bis 4 mm beträgt.

6. Struktur nach einem der vorhergehenden Ansprüche, in welcher die Dicke der Wände 200 bis 500 µm beträgt.

7. Struktur nach einem der vorhergehenden Ansprüche, die ausserdem eine katalytische Beschichtung für die Behandlung umweltschädlicher Gase wie CO oder HC und NOₓ umfasst.

8. Struktur nach einem der vorhergehenden Ansprüche, in welcher eine Vielzahl wabenförmiger Elemente untereinander durch einen Verbindungszement verbunden ist, wobei die Anzahl der Kanäle in den Filterelementen etwa 7,75 bis etwa 62 pro cm² beträgt und diese Kanäle einen Querschnitt von etwa 0,5 bis 9 mm² besitzen.

9. Verwendung einer Struktur nach einem der vorhergehenden Anprüche als Partikelfilter in der Abgasanlage eines Diesel- oder Benzinmotors und vorzugsweise eines Dieselmotors.
